# EUROPÄISCHE PATENTSCHRIFT

(11) **EP 2 396 371 B1**
(45) Veröffentlichungstag und Bekanntmachung des Hinweises auf die Patenterteilung: **20.03.2013**
(21) Anmeldenummer: 10700298.2
(22) Anmeldetag: 07.01.2010
(51) Int. Cl.: C09B 67/20, C09D 5/00, C09D 7/02, C09D 17/00

(54) **LEICHT DISPERGIERBARE FESTE PIGMENTZUBEREITUNGEN**
EASY DISPERSIBLE SOLID PIGMENT PREPARATIONS
PRÉPARATIONS DE PIGMENT SOLIDE FACILEMENT DISPERSIBLES

(30) Priorität: 12.02.2009 DE 102009008740
(43) Veröffentlichungstag der Anmeldung: 21.12.2011
(73) Patentinhaber: Clariant Finance (BVI) Limited, Road Town, Tortola (VG)
(72) Erfinder: BECK, Dietmar, 65929 Frankfurt am Main (DE); BECHTOLD, Uwe, 60437 Frankfurt am Main (DE); FECHNER, Björn, 65817 Eppstein (DE); PITARCH LÓPEZ, Jesús, 60486 Frankfurt am Main (DE)
(74) Vertreter: Hütter, Klaus
(86) Internationale Anmeldenummer: PCT/EP2010/000024
(87) Internationale Veröffentlichungsnummer: WO 2010/091766

(56) Entgegenhaltungen:
- EP-A1- 0 796 876
- DE-A1- 1 595 680
- DE-A1-102004 032 399
- GB-A- 2 014 326
- US-A- 4 309 327
- US-A1- 2006 047 062
- US-A1- 2006 142 416
- MORISHIMA YOTARO: "Self-Assembling Amphiphilic Polyelectrolytes and their Nanostructures" CHINESE JOURNAL OF POLYMER SCIENCE, ZHONGGUO HUAXUEHUI, CN, Bd. 18, Nr. 40, 1. Januar 2000 (2000-01-01), Seiten 323-336, XP009107054 ISSN: 0256-7679

## Beschreibung

Gegenstand der vorliegenden Erfindung sind feste Pigmentzubereitungen enthaltend Dispergieradditive auf Basis von wasserlöslichen, sulfonatgruppenhaltigen Polymeren und ihre Verwendung zum Einfärben von natürlichen und synthetischen Materialien.

Bei der Herstellung von pigmentierten Überzugsmitteln ist eine feine und gleichmäßige Verteilung der Feststoffpartikel im Überzugsmittelsystem qualitätsentscheidend. Werden die Pigmentpartikel im Anwendungssystem nicht optimal dispergiert und stabilisiert, können Flockungserscheinungen und Sedimentbildung auftreten, die zu unerwünschten Viskositätsänderungen des Anwendungssystems, zu Farbtonänderungen und Verlusten an Farbstärke, Deckvermögen, Glanz, Homogenität, Brillanz sowie schlecht reproduzierbaren Farbtönen und zu höherer Ablaufneigung bei Lacken führen können. Um die Feinverteilung und Stabilisierung von Pigmenten in Anstrichsystemen, Druckfarben und Lacken zu erleichtern und damit die optimalen anwendungstechnischen Eigenschaften zu erreichen, werden häufig Netz- und Dispergiermittel verwendet. Das Dispergieren von organischen Pigmenten in einem Anwendungssystem ist jedoch ein kritischer und aufwändiger Prozess. In der Regel werden Pigmente durch den Einsatz von energieintensiven Kugelmühlen, Rührwerkskugelmühlen oder Hochleistungsperlmühlen in Kombination mit Dispergier- und Netzmitteln in eine Flüssigphase eingearbeitet. Eine Möglichkeit, die Pigmentierung von Anstrichsystemen, Druckfarben und Lacken effizienter und weniger kosten- und energieintensiv zu gestalten, besteht darin, leicht dispergierbare feste Pigmentzubereitungen zu verwenden, die sich mit wesentlich geringerem Energieeintrag und schnellerer Farbentwicklung als herkömmliche Pigmente in das Anwendungssystem einarbeiten lassen, was von großem wirtschaftlichem Vorteil ist.

In der WO 2004/046251 werden feste Pigmentzubereitungen, enthaltend wasserlösliche anionische Additive auf Basis von Homo- und Copolymerisaten von ethylenisch ungesättigten Mono- und/oder Dicarbonsäuren beschrieben.
Aus WO2004/074383 sind feste Pigmentzubereitungen bekannt, die sich ausschließlich in lösemittelhaltigen Anwendungsmedien leicht dispergieren lassen. EP-A1-1 132 434 offenbart die Herstellung von leicht dispergierbaren Pigmentzubereitungen durch die Verwendung von Dispergiermitteln auf Basis von aromatischen Polyalkylenglykolen. Diese Zubereitungen sind ausschließlich mit wässrigen Anwendungssystemen verträglich.
Eine Verbesserung hinsichtlich der Verträglichkeit in Anwendungsmedien verschiedener Polarität bringen die in WO 2007/039603 beschriebenen festen Pigmentzubereitungen. Die für die Herstellung solcher Pigmentzubereitungen verwendeten Dispergieradditive bestehen aus einem durch Kettenreaktion synthetisierten polymeren Rückgrat, das Seitenketten auf Basis von hydrophilen Polyethern trägt. Als Beispiel für solche Dispergieradditive wird das Umsetzungsprodukt von einem Styrol-Maleinsäureanhydrid Copolymer mit einem Polyetheramin erwähnt. Die Dispergierung in sehr hydrophoben Lacksystemen, wie z. B. lösemittelhaltigen Industrielacken auf der Basis von Langöl- Alkydharzen, ist jedoch nicht ausreichend.
US 2006/0142416 offenbart dispergierbare Farbmittel, bestehend aus Pigmenten und Copolymeren mit einem Sulfonatgruppengehalt an der Pigmentoberfläche von über 100 µmol/g, für ausschließlich wässrige Inkjet-Tinten. Allerdings werden diese dispergierbaren Farbmittel durch ein aufwändiges Verfahren hergestellt. Zuerst muss das Pigment mit Hilfe von Dispergierhilfsmitteln und hohem Energieeintrag dispergiert werden, anschließend werden Monomere zur Pigmentdispersion zugegeben und mehrere Stunden einpolymerisiert. Die Farbmittel werden nach mehreren Zentrifugations- und Waschschritten isoliert.

Es besteht Bedarf an Pigmentzubereitungen, die sowohl in wässrigen als auch in lösemittelhaltigen Anwendungsmedien eine leichte Dispergierbarkeit aufweisen. Solche Pigmentzubereitungen sollen universell verträglich sein und ihre Einarbeitung soll unabhängig vom Anwendungsmedium leicht und ohne zusätzliche Schritte erfolgen. Leicht dispergierbar bedeutet, dass sich das Pigment mit sehr geringem Energieeintrag und hoher und schneller Farbentwicklung in das Anwendungssystem einarbeiten lässt. Sanfte Scherkräfte, wie z. B. die Wirkung eines Dissolvers (Sägezahnrührer), sollen ausreichend sein, um die vollständige Dispergierung des Pigments zu erreichen, so dass man auf weitergehende kostenintensive Dispergierschritte verzichten kann.

Überraschenderweise wurde gefunden, dass die nachstehend definierten, festen Pigmentzubereitungen sowohl in wässrigen als auch in unpolaren lösemittelhaltigen Anwendungsmedien leicht dispergierbar sind und daher die vorstehend genannte Aufgabe lösen.

Gegenstand der Erfindung sind feste Pigmentzubereitungen, enthaltend
(A) 5 bis 99 Gew.-%, vorzugsweise 40 bis 99 Gew.-%, mindestens eines Pigments, ausgenommen C.I. Pigment Blue 15:3,
(B) 1 bis 95 Gew.-% , vorzugsweise 1 bis 60 Gew.-%, mindestens eines wasserlöslichen Dispergieradditivs auf der Basis von Copolymerisaten bestehend aus den folgenden Struktureinheiten:
   (i) 1,0 bis 50 Mol-%, vorzugsweise 5 bis 30 Mol-%, Struktureinheit B1 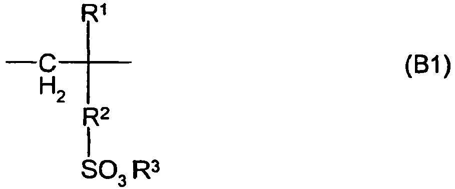
   (ii) 50 bis 99,0 Mol-%, vorzugsweise 60 bis 95 Mol-%, der Struktureinheiten B2 und B3 insgesamt, wobei davon 0 bis 100 Mol-% der Struktureinheit B2 und 0 bis 100 Mol-% der Struktureinheit B3 enthalten sein können 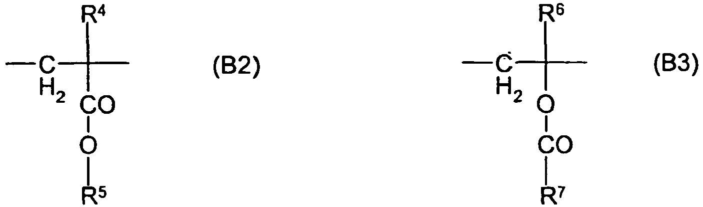
   (iii) 0 bis 49 Mol-%, beispielsweise 1 bis 20 Mol%, Struktureinheit B4 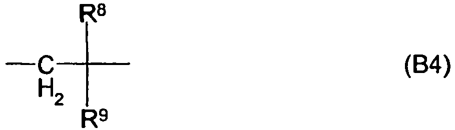 wobei
      - R¹, R⁴, R⁶und R⁸: unabhängig voneinander Wasserstoff oder C₁-C₄-Alkyl sind,
      - R²: eine kovalente Bindung, C₁-C₄-Alkylen, C₁-C₄-Alkylen-C₆-C₁₂-arylen, C₆-C₃₀-Arylen oder der Rest 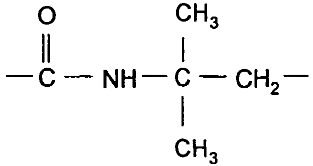 ist
      - R³: Wasserstoff, Na⁺, K⁺ oder N(R¹)₄⁺ ist,
      - R⁵ und R⁷: unabhängig voneinander lineares oder verzweigtes C₁-C₄₀-Alkyl, C₅-C₃₀-Cycloalkyl, C₁-C₄-Alkylen-C₆-C₁₂-aryl oder C₆-C₃₀-Aryl bedeuten, und
      - R⁹: Wasserstoff, lineares oder verzweigtes C₁-C₄₀-Alkyl, C₅-C₃₀-Cycloalkyl, C₆- C₃₀-Aryl, C₁-C₄-Alkylen-C₆-C₁₂-aryl, -F, -Cl, -Br, -OH oder -CN
   bedeuten und wobei Aryl mit C₁-C₄-Alkylgruppen substituiert sein kann;
(C) 0 bis 30 Gew.-%, vorzugsweise 0,1 bis 10 Gew.-%, eines Hilfsmittels aus der Gruppe der Füllstoffe, Flammschutzmittel, Konservierungsmittel, Lichtschutzmittel, pigmentären und nichtpigmentären Dispergatoren, Tenside, Antioxidationsmittel, Entschäumer, Harze und Antistatika, jeweils bezogen auf das Gesamtgewicht der Pigmentzubereitung,
   und wobei der Sulfonatgruppen-Gehalt aus (B1) größer als 1 µmol und kleiner als 100 µmol pro Gramm fester Pigmentzubereitung ist, vorzugsweise 3 bis 98 µmol/g, besonders bevorzugt 9 bis 95 µmol/g.

Als Pigmente (A) werden organische Pigmente bevorzugt. Unter diesen kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z. B. Phthalocyanin-, ausgenommen C.I. Pigment Blue 15:3, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder ein saurer bis alkalischer Ruß aus der Gruppe der Furnaceruße und Gasruße in Betracht.
Von den genannten organischen Pigmenten sind diejenigen besonders geeignet, die für die Herstellung der Zubereitungen möglichst feinteilig sind, wobei bevorzugt 95 % und besonders bevorzugt 99 % der Pigmentpartikel eine Teilchengröße ≤ 500 nm besitzen.
Zweckmäßigerweise haben die Pigmentteilchen einen d₅₀-Wert zwischen 50 und 500 nm, vorzugsweise zwischen 70 und 350 nm.
Als beispielhafte Auswahl besonders bevorzugter organischer Pigmente sind dabei Rußpigmente, wie z. B. Gas- oder Furnaceruße: Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Die Struktureinheit B1 leitet sich von ethylenisch ungesättigten Sulfonsäuren der allgemeinen Formel (b1) ab.

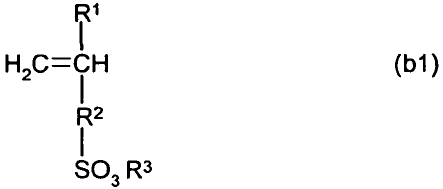

Beispiele dafür sind: Vinylsulfonsäure, Allylsulfonsäure, Methallylsulfonsäure, p-Styrolsulfonsäure, 2-Acrylamido-2-methylpropansulfonsäure und Salze davon. Vorzugsweise liegen im Copolymer die Sulfonsäuregruppen in Salzform vor, beispielsweise als Natrium-, Kalium- oder Ammoniumsalz.

Die Struktureinheit B2 leitet sich von Estern ethylenisch ungesättigter Monocarbonsäuren der allgemeinen Formel (b2) ab.

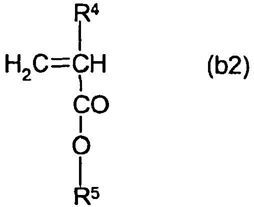

Beispiele dafür sind. Methyl-, Ethyl-, Propyl-, Isopropyl-, Butyl-, Pentyl-, Hexyl-, 2-Ethylhexyl-, Nonyl- und Lauryl-(meth)acrylat sowie Phenyl-, Naphthyl- und Benzyl(meth)acrylat.

Die Struktureinheit B3 leitet sich von Vinylestern der allgemeinen Formel (b3) ab.

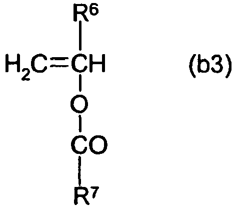

Beispiele dafür sind: Vinylacetat, Isopropenylacetat, Vinylpropionat, Vinylbutyrat, Vinyllaurat, Vinyl-2-ethylhexanoat sowie besonders bevorzugt Vinylester einer Versaticsäure, wobei R⁷ ein verzweigtes C₄-C₁₈-Alkyl, vorzugsweise ein verzweigtes C₆-C₁₂-Alkyl ist, insbesondere die Bedeutung -C(CH₃)(R⁷⁰)(R⁷¹) hat und R⁷⁰ und R⁷¹ Alkylgruppen mit insgesamt 6 oder 7 C-Atomen bedeuten.

Die Struktureinheit B4 leitet sich von den Olefinen der allgemeinen Formel (b4) ab.

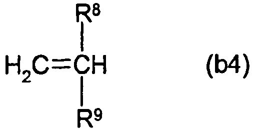

Beispiele davon sind: Ethylen, Propylen, Vinylchlorid, Vinylbromid, Vinylalkohol, Acrylnitril, Styrol, Methylstyrol und Vinyltoluol.

Die Copolymere können statistisch, alternierend, gradientartig oder blockartig aufgebaut sein. Vorzugsweise sind die Copolymere statistisch aufgebaut.
In der bevorzugten Form des Copolymers liegt das mittlere Molekulargewicht Mw im Bereich von 1.000 bis 50.000 g/mol, in der besonders bevorzugten Form im Bereich von 3.000 bis 20.000 g/mol.

Beispiele üblicher Tenside, die als Komponente (C) in den erfindungsgemäßen Pigmentzubereitungen enthalten sein können, sind:
Alkylsulfate wie z. B. Laurylsulfat, Stearylsulfat oder Octadecylsulfat, primäre Alkylsulfonate wie z. B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso Salze dieser Verbindungen. Ferner eignen sich Sojalecithin sowie Kondensationsprodukte aus Fettsäure und Taurin oder Hydroxyethansulfonsäure, ebenso Alkoxylierungsprodukte von Alkylphenolen, Rizinusölkolophoniumestern, Fettalkoholen, Fettaminen, Fettsäuren und Fettsäureamiden. Diese Alkoxylierungsprodukte können mit ionischen Endgruppen ausgestattet sein, beispielsweise als Sulfobernsteinsäure-Halbester oder auch als Sulfonsäure-, Schwefelsäure- und Phospörsäureester, sowie deren Salze, den Sulfonaten, Sulfaten oder Phosphaten. Auch sind oxalkylierte Additionsverbindungen, die durch Umsetzung von Polyepoxiden mit Aminen oder Bisphenol-A bzw. Bisphenol-A-Derivaten mit Aminen erhalten werden, sowie Harnstoffderivate geeignet.

Gegenstand der vorliegenden Erfindung ist weiterhin ein Verfahren zur Herstellung der vorstehend beschriebenen, festen Pigmentzubereitungen, dadurch gekennzeichnet, dass man ein Pigment in Form von Pulver, Granulat oder Presskuchen in Gegenwart von Wasser oder einem organischen Lösungsmittel oder einem Gemisch aus Wasser und organischem Lösungsmittel mit mindestens einem wasserlöslichen Dispergieradditiv (B) und gegebenenfalls besagten üblichen Hilfsmitteln vermischt und anschließend in fester Form isoliert.

Eine besonders vorteilhafte Vermischung kann durch den Einsatz eines Mahl- oder Dispergieraggregats erreicht werden. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt dabei bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Abhängig vom Typ des Pigments kann die so erhaltene Pigmentsuspension einem Finish unterworfen werden. Der Finish wird zweckmäßigerweise in dem vorliegenden organischem Lösemittel, Wasser oder Wasser-Lösemittel-Gemisch bei einer Temperatur von 50 bis 250 °C, besonders 70 bis 200 °C, insbesondere 100 bis 190 °C, und zweckmäßigerweise für eine Zeit von 5 Minuten bis 24 Stunden, besonders 5 Minuten bis 18 Stunden, insbesondere 5 Minuten bis 6 Stunden, durchgeführt. Bevorzugt wird der Finish bei Siedetemperatur, auch bei Temperaturen oberhalb des Siedepunktes des Lösemittelsystems unter Druck durchgeführt. Falls eine reine wässrige Pigmentdispersion bevorzugt wird, kann das ggf. eingesetzte Lösemittel mit Hilfe einer Wasserdampfdestillation entfernt werden.

Die erfindungsgemäßen Pigmentzubereitungen werden in fester Form isoliert, beispielsweise durch Filtration, Dekantation, Zentrifugation, Sprühtrocknung, Wirbelschichttrocknung, Bandtrocknung, Sprühgranulierung oder Trocknung im Schaufeltrockner. Die Isolierung der erfindungsgemäßen Pigmentzubereitungen erfolgt vorzugsweise durch Filtration und abschließende Trocknung. Falls die erhaltene Pigmentzubereitung grobkörnig anfällt, wird sie zweckmäßigerweise noch einer Mahlung, z. B. Trockenmahlung, unterzogen.

Gegenstand der vorliegenden Erfindung ist auch die Verwendung der erfindungsgemäßen Pigmentzubereitungen zum Pigmentieren und Färben von natürlichen und synthetischen Materialien aller Art, insbesondere von Anstrichmitteln, Beschichtungssystemen, wie Tapetenfarben, Druckfarben, Dispersions- und Lackfarben, die wasser- und/oder lösemittelhaltig sind, insbesondere lösemittelhaltige Farben auf der Basis von Alkydharzlacken. Ferner eignen sich die erfindungsgemäßen Pigmentzubereitungen zur Einfärbung makromolekularer Materialien aller Art, z. B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glas, insbesondere Glasflaschen, sowie zur Massefärbung von Dachziegeln, als Farbmittel in elektrophotographischen Tonern und Entwicklern, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z. B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentzubereitungen zur Herstellung von Inkjet-Tinten, wie z. B. auf wässriger oder nichtwässriger Basis ("Solvent Based"), Mikroemulsionstinten, UV-härtbare Tinten sowie in solchen Tinten, die nach dem Hot-Melt-Verfahren funktionieren, für den Einsatz in allen konventionellen Ink-Jet-Druckern, insbesondere für solche, die auf dem Bubble-Jet- oder Piezo-Verfahren beruhen. Mit diesen Tinten kann Papier bedruckt werden, sowie natürliche oder synthetische Fasermaterialien, Folien und Kunststoffe.
Zudem können die erfindungsgemäßen Pigmentzubereitungen zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d. h. dreidimensional gestaltet sein und sowohl vollständig oder nur teilweise bedruckt oder beschichtet werden.
Außerdem sind die erfindungsgemäßen Pigmentzubereitungen auch geeignet als Farbmittel für Farbfilter ("Colour Filter") für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper").

Gegenstand der Erfindung ist auch ein Verfahren zum Färben eines hochmolekularen organischen Materials, das ein gleichförmiges Dispergieren einer wirksam pigmentierenden Menge der erfindungsgemäßen Pigmentzubereitung in dem organischen Material umfasst. Unter Einrühren wird jegliche Art von Mischen unter Einsatz geringer Scherkräfte verstanden, also z. B. auch Schütteln. Eine wirksam pigmentierende Menge liegt meist zwischen 0,01 und 40 Gew.-% Pigmentzubereitung, bezogen auf das Gewicht des zu pigmentierenden organischen Materials.

In den nachfolgenden Beispielen bedeutet:
VeoVa^{®} 9 (Fa. Hexion) = Vinylester der Versaticsäure mit R⁷⁰ + R⁷¹ = 6 C-_{Atome}; VeoVa^{®} 10 (Fa. Hexion) = Vinylester der Versaticsäure mit R⁷⁰ + R⁷¹ = 7 C-Atome

### Beispiel 1:

540 g wasserfeuchter Presskuchen (30 Gew.-%) Hostaperm^{®} Scharlach GO (Pigment Red 168, C.I. No. 59300) wurden in 1.800 g Wasser suspendiert und mit 18 g Dispergieradditiv (Copolymerisat aus 12,5 Mol-% p-Styrolsulfonsäure Natriumsalz, 62,5 Mol% Methyl(meth)acrylat und 25 Mol-% VeoVa 9; Mw ca. 7.000 g/mol, gelöst in 200 g Wasser) vermischt. Der pH-Wert wurde auf 8 bis 8,5 eingestellt und die Mischung 1 Stunde bei 80 °C gerührt. Anschließend wurde das oberflächenbelegte Pigment abfiltriert und mit Wasser auf eine Leitfähigkeit (Filtrat) < 0,5 mS/cm gewaschen. Das belegte Pigment wurde bei 80 °C im Umluftrockenschrank getrocknet und anschließend pulverisiert. 171 g feste Pigmentzubereitung mit 94 µmol Sulfonatgruppen/ g Pigmentzubereitung wurden erhalten.

### Beispiel 2:

540 g wasserfeuchter Presskuchen (30 Gew.-%) Hostaperm^{®} Scharlach GO (C.I. No. 59300) wurden in 1.800 g Wasser suspendiert und mit 9 g Dispergieradditiv (Copolymerisat aus 12,5 Mol-% Vinylsulfonsäure Natriumsalz, 50 Mol% Vinylacetat und 37,5 Mol-% VeoVa 10^{®}, Mw = 8.000 g/mol, gelöst in 100 g Wasser) vermischt. Der pH-Wert wurde auf 8 bis 8,5 eingestellt und die Mischung 1 Stunde bei 80 °C umgerührt. Anschließend wurde das oberflächenbelegte Pigment abfiltriert und mit Wasser auf eine Leitfähigkeit (Filtrat) < 0,5 mS/cm gewaschen. Das belegte Pigment wurde bei 80 °C im Umluftrockenschrank getrocknet und anschließend pulverisiert. 162 g feste Pigmentzubereitung mit 47 µmol Sulfonatgruppen/ g Pigmentzubereitung wurden erhalten.

### Beispiel 3:

543 g wasserfeuchter Presskuchen (29,5 Gew.-%) Pigment Rot 122 (C.I. No. 73915), in 900 g Wasser suspendiert, wurden mit 18 g Dispergieradditiv (Copolymerisat aus 11,1 Mol-% Vinylsulfonsäure Natriumsalz, 44,5 Mol-% Vinylacetat, 33,3 Mol% VeoVa 10^{®} und 11,1 Mol-% Vinylalkohol, Mw = 7.500 g/mol) und 7,5 g C₁₂/C₁₆-Alkylethoxylat mit 10 EO-Einheiten, gelöst in 200 g Wasser, vermischt. Der pH-Wert wurde auf 8 bis 8,5 eingestellt und 800 g Isobutanol wurden dazu gegeben. Die Mischung wurde einem Druckfinish für 3 Stunden bei 125 °C unterworfen. Anschließend wurde das Isobutanol mittels Wasserdampfdestillation abdestilliert, das belegte Pigment abfiltriert und mit Wasser auf eine Leitfähigkeit (Filtrat) < 0,5 mS/cm gewaschen. Das belegte Pigment wurde bei 80 °C im Umluftrockenschrank getrocknet und anschließend pulverisiert. 173 g feste Pigmentzubereitung mit 87 µmol Sulfonatgruppen/ g Pigmentzubereitung wurden erhalten.

Zur Beurteilung der leichten Dispergierbarkeit in Anstrichsystemen verschiedener Polarität wurden die Pigmentzubereitungen aus den Beispielen 1 bis 3 durch Dissolver-Dispergierung in einem lackbenzinhaltigen lufttrocknenden Langöl-Alkydharz-Einbrennlack (LA-Lack) und in einer wässrigen Dispersionsfarbe für Außenanstriche (W-Dispersionsfarbe) getestet.

### Vorschrift zur Pigmentierung eines lösemittelhaltigen LA-Lacks:

In einem mit einer 4 cm Zahnscheibe versehenen Dissolver wurden 15,0 g der leicht dispergierbaren Pigmentzubereitungen aus den Beispielen 1 und 2 (bzw. 9,6 g im Fall des Beispiels 3) in 45,0 g (bzw. 50,4 g beim Beispiel 3) des Langöl-Alkydharz Anreibelacks (40 %) 30 min bei 40 °C und 10.000 Upm dispergiert. 10 g dieses pigmentierten Anreibelacks wurden unter langsamem Rühren mit einem Glasstab bei Raumtemperatur mit 10 g eines Auflackgemisches (54 %) und 30 g (bzw. 20 g im Fall des Beispiels 3) eines Klarlackgemisches versetzt.

Zur Herstellung der Aufhellung wurden 8,1 g (bzw. 6,7 g im Fall des Beispiels 3) des obigen Volltonlacks mit 30 g Langöl-Alkydharz Weißlack (27 % TiO₂, 1,5 % Octa-Soligen^{®} 173) durch einfaches manuelles Einrühren homogenisiert. Die so hergestellten Farben wurden mit einem Filmziehrahmen 200 µm auf Prüfkarten aufgezogen und zunächst 15 min bei Raumtemperatur und anschließend 60 min bei 60 °C im Trockenschrank getrocknet.

### Allgemeine Vorschrift zur Pigmentierung einer wässrigen Dispersionsfarbe:

In einem mit einer 4 cm Zahnscheibe versehenen Dissolver wurden 36,0 g der leicht dispergierbaren Pigmentzubereitung aus den Beispielen 1 bis 3 in 44,0 g eines Anreibegemisches 30 min bei 20 °C und 8.000 Upm dispergiert (45 %iges Mahlgut). Zur Herstellung der Aufhellung wurden 1,16 g des Mahlguts mit 50,84 g wässriger Weißdispersion (20 % TiO₂) durch einfaches manuelles Einrühren homogenisiert (1 % Aufhellung). Die so hergestellten Farben wurden mit einem Filmziehrahmen 200 µm auf Prüfkarten aufgezogen und 60 min bei Raumtemperatur getrocknet.

Als Referenzbeispiele wurden die Pigmente Hostaperm^{®} Scharlach GO (P.R.168) und Hostaperm^{®} Rosa E (P. R.122) von Clariant, in die oben genannten Lacksysteme mit dem Dissolver eindispergiert und mit den Pigmentzubereitungen aus den Beispielen 1 bis 3 verglichen. Die in den Beispielen beschriebenen erfindungsgemäßen Pigmentzubereitungen zeigen vorteilhafte Effekte bei der Dissolver-Dispergierung im hydrophoben lösemittelhaltigen Lacksystem und in der wässrigen Dispersionsfarbe im Vergleich zu den herkömmlichen, unbehandelten Pigmenten.

| Dispergieradditiv | LA-Lack | | W-Dispersionsfarbe | |
|---|---|---|---|---|
| | Farbstärke | dC | Farbstärke | dC |
| Beispiel 1 | 133 % | 0,87 | 136 % | 1,12 |
| Beispiel 2 | 130 % | 0,80 | 140 % | 0,85 |
| Beispiel 3 | 120 % | 2,00 | 105 % | 0,10 |

| | | | | |
|---|---|---|---|---|
| dC >0 bedeutet einen reineren Farbeindruck. | | | | |

### Herstellung einer Pigmentpräparation

Das Pigment wurde, entweder als Pulver, Granulat oder als Presskuchen, zusammen mit dem Dispergiermittel und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurden von der Dispersion die Mahlkörper abgetrennt, die Pigmentpräparation isoliert und mit entionisiertem Wasser auf eine Konzentration von ca. 20 % eingestellt und mit Hilfe eines Sprühtrockners der Firma Büchi (Büchi 190) getrocknet. Es wurde ein trockenes Pulver erhalten.

### Beurteilung einer Pigmentpräparation

Die Bestimmung der Farbstärke und des Farbtons erfolgte nach DIN 55986. Geprüft wurden die wässrige Pigmentdispersion und das trockene Pulver (Farbstärke und die Verträglichkeiten mit dem einzufärbenden Medium) in einer herkömmlichen wasser-basierten Dispersionsfarbe für Innenanstriche und in einem herkömmlichen lösungsmittelhaltigen Lack. Für den "Rub-Out-Test" wurde die Farbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben).

Die Viskosität wurde mit einem Kegel-Platte-Viskosimeter (Roto Visco 1) der Firma Haake bei 20 °C bestimmt (Titankegel: 60 mm, 1°), wobei die Abhängigkeit der Viskosität von dem Schergefälle in einem Bereich zwischen 0 und 200 s-1 untersucht wurde. Die Viskositäten wurden bei einem Schergefälle von 60 s-1 gemessen.

Für eine Beurteilung der Lagerstabilität der Dispersionen wurde die Viskosität direkt nach der Herstellung der Präparation gemessen, sowie nach vierwöchiger Lagerung bei 50 °C.

Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

| | |
|---|---|
| 35 Teile | C.I. Pigment Gelb 74 |
| 5 Teile | Dispergiermittel aus Beispiel 2 |
| 10 Teile | Ethoxylierungsprodukt von Laurylalkohol mit 7 Mol EO |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Gelb 74 |
| 10 Teile | Dispergiermittel aus Beispiel 2 |
| 20 Teile | Ethoxylierungsprodukt von Laurylalkohol mit 7 Mol EO |

mit 94 µmol Sulfonatgruppen/ g Pigmentzubereitung

Die Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Das trockene Pulver lässt sich spontan in die wasserbasierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

## Patentansprüche

1. Feste Pigmentzubereitungen, enthaltend
(A) 5 bis 99 Gew.-% mindestens eines Pigments, ausgenommen C. I. Pigment Blue 15:3,
(B) 1 bis 95 Gew.-% mindestens eines wasserlöslichen Dispergieradditivs auf der Basis von Copolymerisaten, bestehend aus den folgenden Struktureinheiten:
(i) 1,0 bis 50 Mol-% Struktureinheit B1 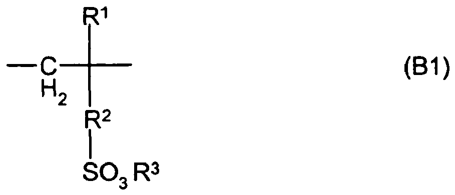
(ii) 50 bis 99,0 Mol-% der Struktureinheiten B2 und B3 insgesamt, wobei davon
0 bis 100 Mol-% der Struktureinheit B2 und
0 bis 100 Mol-% der Struktureinheit B3 enthalten sein können 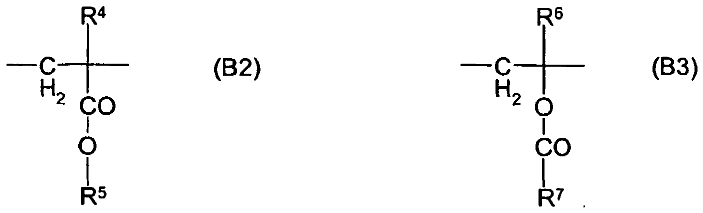
(iii) 0 bis 49 Mol-% Struktureinheit B4 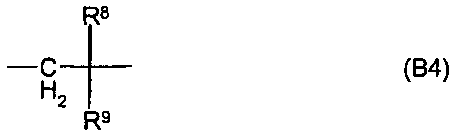 wobei
R¹, R⁴, R⁶und R⁸ unabhängig voneinander Wasserstoff oder C₁-C₄-Alkyl sind,
R² eine kovalente Bindung, C₁-C₄-Alkylen, C₁-C₄-Alkylen-C₆-C₁₂-arylen, C₆-C₃₀-Arylen oder der Rest 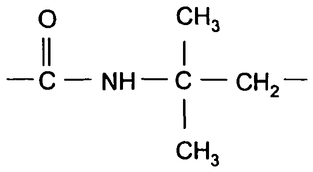 ist
R³ Wasserstoff, Na⁺, K⁺ oder N(R¹)₄⁺ ist,
R⁵ und R⁷ unabhängig voneinander C₁-C₄₀-Alkyl, C₅-C₃₀-Cycloalkyl, C₁-C₄-Alkylen-C₆-C₁₂-aryl oder C₆-C₃₀-Aryl bedeuten, und
R⁹ Wasserstoff, C₁-C₄₀-Alkyl, C₅-C₃₀-Cycloalkyl, C₆-C₃₀-Aryl, C₁-C₄-Alkylen-C₆-C₁₂-arylen, -F, -Cl, -Br, -OH oder -CN
bedeuten, und wobei Aryl mit C1-C4-Alkyl substituiert sein kann;
(C) 0 bis 30 Gew.-% eines Hilfsmittels aus der Gruppe der Füllstoffe, Flammschutzmittel, Konservierungsmittel, Lichtschutzmittel, pigmentären und nichtpigmentären Dispergatoren, Tenside, Antioxidationsmittel, Entschäumer, Harze und Antistatika,
jeweils bezogen auf das Gesamtgewicht der Pigmentzubereitung;
und wobei der Sulfonatgruppen-Gehalt aus (B1) größer als 1 µmol und kleiner als 100 µmol pro Gramm fester Pigmentzubereitung ist.

2. Pigmentzubereitung nach Anspruch1, **gekennzeichnet durch** einen Gehalt an Pigment (A) von 40 bis 99 Gew.-%, bezogen auf das Gesamtgewicht der Pigmentzubereitung.

3. Pigmentzubereitung nach Anspruch 1 oder 2, **gekennzeichnet durch** einen Gehalt an Dispergieradditiv (B) von 1 bis 60 Gew.%, bezogen auf das Gesamtgewicht der Pigmentzubereitung.

4. Pigmentzubereitung nach einem oder mehreren der Ansprüche 1 bis 3, **dadurch gekennzeichnet, dass** die Struktureinheit (B1) 5 bis 30 Mol-% ausmacht.

5. Pigmentzubereitung nach einem oder mehreren der Ansprüche 1 bis 4, **dadurch gekennzeichnet, dass** die Summe der Struktureinheiten (B2) + (B3) 60 bis 95 Mol-% ausmacht.

6. Pigmentzubereitung nach einem oder mehreren der Ansprüche 1 bis 5, **dadurch gekennzeichnet, dass** die Struktureinheit (B4) 1 bis 20 Mol-% ausmacht.

7. Pigmentzubereitung nach einem oder mehreren der Ansprüche 1 bis 6, **dadurch gekennzeichnet, dass** der Sulfonatgruppen-Gehalt aus (B1) 3 bis 98 µmol/g ist.

8. Pigmentzubereitung nach einem oder mehreren der Ansprüche 1 bis 7, **dadurch gekennzeichnet, dass** das organische Pigment aus der Klasse der Monoazo-, Disazo-, verlackten Azo-, β-Naphthol-, Naphthol AS-, Benzimidazolon-, Disazokondensations-, Azo-Metallkomplex-Pigmente, Phthalocyanin-, ausgenommen C. I. Pigment Blue 15:3, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder der sauren bis alkalischen Ruße aus der Gruppe der Furnaceruße und Gasruße ist.

9. Pigmentzubereitung nach einem oder mehreren der Ansprüche 1 bis 8, enthaltend die Struktureinheit (B3), wobei B3 die Bedeutung Vinylester einer Versaticsäure hat.

10. Verfahren zur Herstellung einer festen Pigmentzubereitung nach einem oder mehreren Ansprüchen 1 bis 9, **dadurch gekennzeichnet, dass** man ein Pigment in Form von Pulver, Granulat oder Presskuchen in Gegenwart von Wasser oder einem organischen Lösungsmittel oder einem Gemisch aus Wasser und organischem Lösungsmittel mit mindestens einem wasserlöslichen Dispergieradditiv (B) vermischt und anschließend in fester Form isoliert.

11. Verfahren zur Herstellung einer festen Pigmentzubereitung nach Anspruch 10, **dadurch gekennzeichnet, dass** die Pigmentzubereitung durch Filtration, Trocknung und anschließende Mahlung in fester Form isoliert wird.

12. Verfahren zur Herstellung einer festen Pigmentzubereitung nach Anspruch 10, **dadurch gekennzeichnet, dass** die Pigmentzubereitung durch Sprühtrocknung in fester Form isoliert wird.

13. Verwendung einer festen Pigmentzubereitung nach einem oder mehreren Ansprüchen 1 bis 9 zum Pigmentieren und Färben von natürlichen und synthetischen Materialien.

14. Verwendung nach Anspruch 13 zum Pigmentieren von wässrigen Anstrichmitteln, Dispersions- und Lackfarben, wasserverdünnbaren Lacken, Tapetenfarben und Druckfarben.

15. Verwendung nach Anspruch 13 zum Pigmentieren von lösemittelhaltigen Anstrichmitteln, Dispersions- und Lackfarben, Tapetenfarben und Druckfarben.

## Claims

1. A solid pigment preparation comprising
(A) from 5% to 99% by weight of at least one pigment other than C. I. Pigment Blue 15:3,
(B) from 1% to 95% by weight of at least one water-soluble dispersing additive based on copolymers consisting of the following structural units:
(i) from 1.0 to 50 mol% of structural unit B1 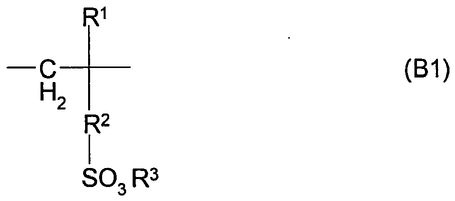
(ii) from 50 to 99.0 mol% of structural units B2 and B3 in a total whereof
from 0 to 100 mol% of said structural unit B2 and
from 0 to 100 mol% of said structural unit B3 can be present, 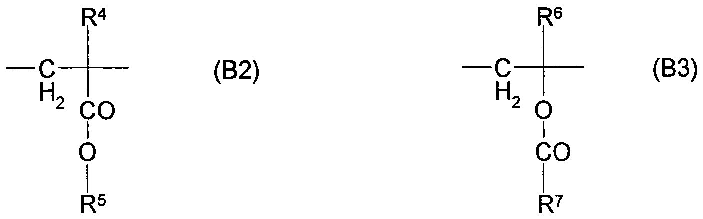
(iii) from 0 to 49 mol% of structural unit B4 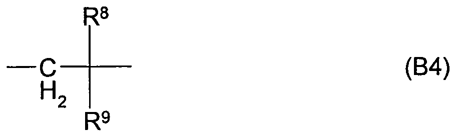 where
R¹, R⁴, R⁶ and R⁸ are each independently hydrogen or C₁-C₄-alkyl,
R² is a covalent bond, C₁-C₄-alkylene, C₁-C₄-alkylene-C₆-C₁₂-arylene, C₆-C₃₀-arylene or the radical 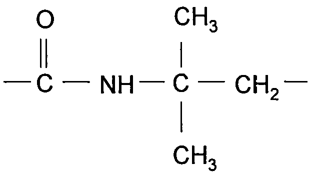
R³ is hydrogen, Na⁺, K⁺ or N(R¹)4⁺,
R⁵ and R⁷ are each independently C₁-C₄₀-alkyl, C₅-C₃₀-cycloalkyl, C₁-C₄-alkylene-C₆-C₁₂-aryl or C₆-C₃₀-aryl, and
R⁹ is hydrogen, C₁-C₄₀-alkyl, C₅-C₃₀-cycloalkyl, C₆-C₃₀-aryl, C₁-C₄-alkylene-C₆-C₁₂-arylene, -F, -Cl, -Br, -OH or -CN,
and where aryl may be substituted with C1-C4-alkyl;
(C) from 0% to 30% by weight of an auxiliary from the group consisting of fillers, flame retardants, preservatives, photoprotectants, pigmentary and nonpigmentary dispersants, surfactants, antioxidants, defoamers, resins and antistats,
all based on the total weight of the pigment preparation,
and where the sulfonate group content of (B1) is greater than 1 µmol and less than 100 µmol per gram of solid pigment preparation.

2. The pigment preparation as claimed in claim 1, **characterized by** a pigment (A) content in the range from 40% to 99% by weight, based on the total weight of the pigment preparation.

3. The pigment preparation as claimed in claim 1 or 2, **characterized by** a dispersing additive (B) content in the range from 1% to 60% by weight, based on the total weight of the pigment preparation.

4. The pigment preparation as claimed in one or more of claims 1 to 3, wherein said structural unit (B1) comprises from 5 to 30 mol%.

5. The pigment preparation as claimed in one or more of claims 1 to 4, wherein the sum total of said structural units (B2) + (B3) comprises from 60 to 95 mol%.

6. The pigment preparation as claimed in one or more of claims 1 to 5, wherein said structural unit (B4) comprises from 1 to 20 mol%.

7. The pigment preparation as claimed in one or more of claims 1 to 6, wherein the sulfonate group content of (B1) is in the range from 3 to 98 µmol/g.

8. The pigment preparation as claimed in one or more of claims 1 to 7, wherein the organic pigment is from the class of the monoazo, disazo, laked azo, β-naphthol, Naphthol AS, benzimidazolone, disazo condensation, azo metal complex pigments, phthalocyanine, except C. I. Pigment Blue 15:3, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or the acidic to alkaline carbon blacks from the group consisting of furnace blacks and gas blacks.

9. The pigment preparation as claimed in one or more of claims 1 to 8, comprising said structural unit (B3), where B3 is the vinyl ester of a Versatic acid.

10. A process for producing a solid pigment preparation as claimed in one or more of claims 1 to 9, which comprises a pigment in the form of powder, granulate or presscake being mixed with at least one water-soluble dispersing additive (B) in the presence of water or an organic solvent or a mixture of water and organic solvent and subsequently isolated in solid form.

11. The process for producing a solid pigment preparation as claimed in claim 10, wherein the pigment preparation is isolated in solid form by filtration, drying and subsequent grinding.

12. The process for producing a solid pigment preparation as claimed in claim 10, wherein the pigment preparation is isolated in solid form by spray drying.

13. The use of a solid pigment preparation as claimed in one or more of claims 1 to 9 for pigmenting and coloring natural and synthetic materials.

14. The use as claimed in claim 13 for pigmenting aqueous paints, emulsion and varnish colors, water-thinnable varnishes, wallpaper colors and printing inks.

15. The use as claimed in claim 13 for pigmenting solvent-containing paints, emulsion and varnish colors, wallpaper colors and printing inks.

## Revendications

1. Préparations de pigments solides, contenant
(A) 5 à 99 % en poids d'au moins un pigment, hormis C. I. Pigment Blue 15:3,
(B) 1 à 95 % en poids d'au moins un additif dispersant hydrosoluble à base de copolymérisats, constitués des motifs structuraux suivants :
(i) 1,0 à 50 % en moles de motif structural B1 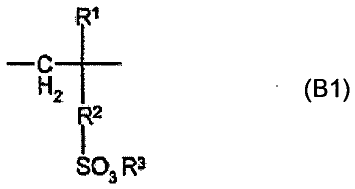
(ii) 50 à 99,0 % en moles des motifs structuraux B2 et B3 au total, dont
0 à 100 % en moles du motif structural B2 et
0 à 100 % en moles du motif structural B3 peuvent être contenus 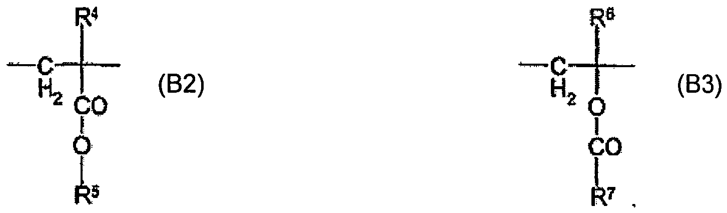
(iii) 0 à 49 % en moles de motif structural B4 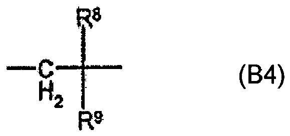 où
R¹, R⁴, R⁶ et R⁸ représentent, indépendamment les uns des autres un atome d'hydrogène ou un groupe alkyle en C₁-C₄,
R² est une liaison covalente, un groupe alkylène en C₁-C₄, alkylène(C₁-C₄)-arylène(C₆-C₁₂), arylène en C₆-C₃₀ ou le radical 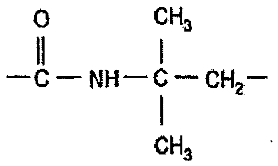
R³ est un atome d'hydrogène, Na⁺, K⁺ ou N(R¹)₄⁺,
R⁵ et R⁷ représentent indépendamment l'un de l'autre un groupe alkyle en C₁-C₄₀, cycloalkyle en C₅-C₃₀, alkylène(C₁-C₄)-aryle(C₆-C₁₂) ou aryle en C₆-C₃₀, et
R⁹ représente un atome d'hydrogène, un groupe alkyle en C₁-C₄₀, cycloalkyle en C₅-C₃₀, aryle en C₆-C₃₀, alkylène(C₁-C₄)-arylène(C₆-C₁₂), -F, -CI, -Br, -OH ou -CN
et aryle pouvant être substitué par alkyle en C₁-C₄;
(C) 0 à 30 % en poids d'un adjuvant choisi dans le groupe des charges, agents ignifuges, conservateurs, photoprotecteurs, dispersants pigmentaires et non pigmentaires, tensioactifs, antioxydants, antimousses, résines et agents antistatiques,
chaque fois par rapport au poids total de la préparation de pigment ;
et la teneur en groupes sulfonate de (B1) étant supérieure à 1 µmole et inférieure à 100 µmoles par gramme de préparation de pigment solide.

2. Préparation de pigment selon la revendication 1, **caractérisée par** une teneur en pigment (A) de 40 à 99 % en poids, par rapport au poids total de la préparation de pigment.

3. Préparation de pigment selon la revendication 1 ou 2, **caractérisée par** une teneur en additif de dispersion (B) de 1 à 60 % en poids, par rapport au poids total de la préparation de pigment.

4. Préparation de pigment selon une ou plusieurs des revendications 1 à 3, **caractérisée en ce que** le motif structural (B1) représente de 5 à 30 % en moles.

5. Préparation de pigment selon une ou plusieurs des revendications 1 à 4, **caractérisée en ce que** la somme des motifs structuraux (B2) + (B3) représente de 60 à 95 % en moles.

6. Préparation de pigment selon une ou plusieurs des revendications 1 à 5, **caractérisée en ce que** le motif structural (B4) représente de 1 à 20 % en moles.

7. Préparation de pigment selon une ou plusieurs des revendications 1 à 6, **caractérisée en ce que** la teneur en groupes sulfonate de (B1) est de 3 à 98 µmoles/g.

8. Préparation de pigment selon une ou plusieurs des revendications 1 à 7, **caractérisée en ce que** le pigment organique est choisi dans la classe des pigments monoazoïques, disazoïques, azoïques laqués, β-naphtol, naphtol AS, benzimidazolone, de condensation disazoïques, azoïques à complexe métallifère, des pigments phtalocyanine, hormis le C. I. Pigment Blue 15:3, quinacridone, pérylène, périnone, thio-indigo, anthanthrone, anthraquinoniques, flavanthrone, indanthrone, isoviolanthrone, pyranthrone, dioxazine, quinophtalone, isoindolinone, iso-indoline et dicétopyrrolopyrrole ou des noirs de carbone acides à alcalins, choisis dans le groupe des noirs de fourneau et noirs de fumée.

9. Préparation de pigment selon une ou plusieurs des revendications 1 à 8, contenant le motif structural (B3), B3 ayant la signification d'ester vinylique d'un acide versatique.

10. Procédé pour la production d'une préparation de pigment solide selon une ou plusieurs des revendications 1 à 9, **caractérisé en ce qu'**on mélange un pigment sous forme de poudre, granulé ou tourteau de filtration, en présence d'eau ou d'un solvant organique ou d'un mélange d'eau et de solvant organique avec au moins un additif de dispersion (B) hydrosoluble et ensuite on l'isole sous forme solide.

11. Procédé pour la production d'une préparation de pigment solide selon la revendication 10, **caractérisé en ce qu'**on isole la préparation de pigment sous forme solide par filtration, séchage et broyage subséquent.

12. Procédé pour la production d'une préparation de pigment solide selon la revendication 10, **caractérisé en ce qu'**on isole la préparation de pigment sous forme solide par séchage par atomisation.

13. Utilisation d'une préparation solide de pigment selon une ou plusieurs des revendications 1 à 9, pour la pigmentation et la coloration de matières naturelles ou synthétiques.

14. Utilisation selon la revendication 13, pour la pigmentation de peintures, peintures en dispersion et laquées, laques diluables à l'eau, couleurs pour papiers-peints et encres d'impression, aqueuses.

15. Utilisation selon la revendication 13, pour la pigmentation de peintures, peintures en dispersion et laquées, couleurs pour papiers-peints et encres d'impression, contenant des solvants.
